# EUROPÄISCHE PATENTSCHRIFT

(11) **EP 1 143 321 B1**
(45) Veröffentlichungstag und Bekanntmachung des Hinweises auf die Patenterteilung: **26.09.2007**
(21) Anmeldenummer: 01106621.4
(22) Anmeldetag: 16.03.2001
(51) Int. Cl.: G05G 1/06, F16H 59/02, G05G 1/12

(54) **Handschaltung für ein Kraftfahrzeug**
Gear lever for automotive vehicle
Levier de commande pour véhicule automobile

(30) Priorität: 06.04.2000 DE 10017247
(43) Veröffentlichungstag der Anmeldung: 10.10.2001
(73) Patentinhaber: Dr.Ing. h.c. F. Porsche Aktiengesellschaft, 70435 Stuttgart (DE)
(72) Erfinder: Netzker, Ralph-Maria, 71636 Ludwigsburg (DE)

(56) Entgegenhaltungen:
- DE-A- 19 750 031
- DE-B- 1 202 071
- GB-A- 2 156 261
- JP-A- 9 006 452

## Beschreibung

Die Erfindung betrifft eine Handschaltung für ein Kraftfahrzeug nach der Gattung des Hauptanspruches.

Eine derartige Handschaltung ist beispielsweise aus dem nächstliegenden Stand der Technik, der JP 09006452 A bekannt, bei der ein Schaltgriff im Montagezustand gegenüber einem Handschalthebel axial unverschiebbar festgelegt ist. Hierzu sind am Schaltgriff radial auslenkbare Rastelemente vorgesehen, die in zwei Einrastpunkte des Handschalthebels eingreifen und von einer Sicherungshülse umgeben sind.

Weiterhin ist aus der DE 197 50 031 A1 eine Handschaltung bekannt, bei der zur axialen Lagepositionierung einer Sicherungshülse eine Betätigungshülse sowie eine darin geführte Schraubenfeder erforderlich ist, die die Sicherungshülse in der gewünschten, die Rastzungen eines Schaltgriffes umgreifende Lagepositionierung hält. Dieser Aufbau eines Handschalthebels erfordert viele zusätzliche Bauteile und beansprucht einen Bauraum, der bei vielen Handschaltungsanordnungen nicht zur Verfügung steht. Darüberhinaus muß zur Demontage des Schaltgriffes ein Distanzring entfernt und die Betätigungshülse verschoben werden, bevor die Sicherungshülse entgegen der Schraubenfederkraft vom Montageabschnitt entfernt werden kann.

Der Erfindung liegt demgegenüber die Aufgabe zugrunde, eine gattungsgemäße Handschaltung für ein Kraftfahrzeug so zu verbessern, daß eine einfache, aus wenigen Bauteilen bestehende sichere Befestigung des Schaltgriffs auf dem Handschalthebel gewährleistet ist, die darüberhinaus einfach montiert und demontiert werden kann und nur eine geringe Einbautiefe aufweist.

Diese Aufgabe wird erfindungsgemäß mit den Merkmalen des Hauptanspruchs gelöst. Durch die mit einem Ringabschnitt und mit radial auslenkbaren Rastzungen versehene Sicherungshülse wird einerseits sichergestellt, daß die Rastelemente des Schaltknaufs im montierten Zustand in der Ringnut des Handschalthebels sicher gehalten sind und daß durch an der Sicherungshülse und am Schaltknauf vorgesehene Anschläge die Sicherungshülse selbsthemmend in ihrer axialen Lage gehalten ist. Der Aufbau der Schaltgriffsicherung ist einfach, kostengünstig und darüber hinaus auf einfache Art und Weise zu montieren. Bei einer Demontage des Schaltgriffes braucht lediglich die Anschlagkraft der am Wandungsabschnitt des Schaltgriffs abgestützten Rastzungen überwunden werden und die Sicherungshülse vom Montageabschnitt abgezogen werden.

Die Sicherungshülse wird auf dem Schaltgriff vormontiert, bevor der Schaltgriff auf den Handschalthebel gesteckt wird. Sind die Rastelemente des Schaltgriffes nicht in der Ringnut des Handschalthebels eingerastet ist auch das Verschieben der Sicherungshülse in ihre Endlage nicht möglich. Damit hat der Monteur eine Rückmeldung, daß der Schaltgriff noch nicht richtig positioniert worden ist. Fehlmontagen werden damit vermieden.

Weitere Vorteile und vorteilhafte Weiterbildungen der Erfindung ergeben sich aus den Unteransprüchen und der Beschreibung.

Die an einem Wandungsabschnitt des Schaltgriffs als Anschlag ausgebildete Ringschulter weist eine Fase mit einem Winkel zwischen 45° und 60° auf. Damit kann sich einerseits die Sicherungshülse nicht ungewollte verschieben, andererseits ist eine einfache Demontage des Schaltgriffs vom Handschalthebel möglich, indem die an der Ringschulter anliegenden radial auslenkbaren Rastzungen der Sicherungshülse über die Ringschulter gezogen werden, so daß der Ringabschnitt der Sicherungshülse die in die Ringnut des Handschalthebels eingreifenden Rastelemente des Schaltknaufs freigibt.

Damit die Montage bzw. Demontage des Schaltgriffs leicht handhabbar ist, sind am Ringabschnitt der Sicherungshülse Führungsschultern vorgesehen, mit deren Hilfe die Sicherungshülse für den Monteur gut greifbar ist und damit auf einfache Art und Weise in die Montage- bzw. Demontagestellung gebracht werden kann.

Als Verdrehsicherung für die Sicherungshülse sind am Ringabschnitt der Sicherungshülse Führungsnasen ausgebildet, die im montierten Zustand in zwischen den Rastelementen des Schaltgriffs ausgebildete Lücken eingreifen. Damit ist sichergestellt, daß die die Montage erleichternden Führungsschultern der Sicherungshülse in der für den Monteur optimalen Lageposition verbleiben.

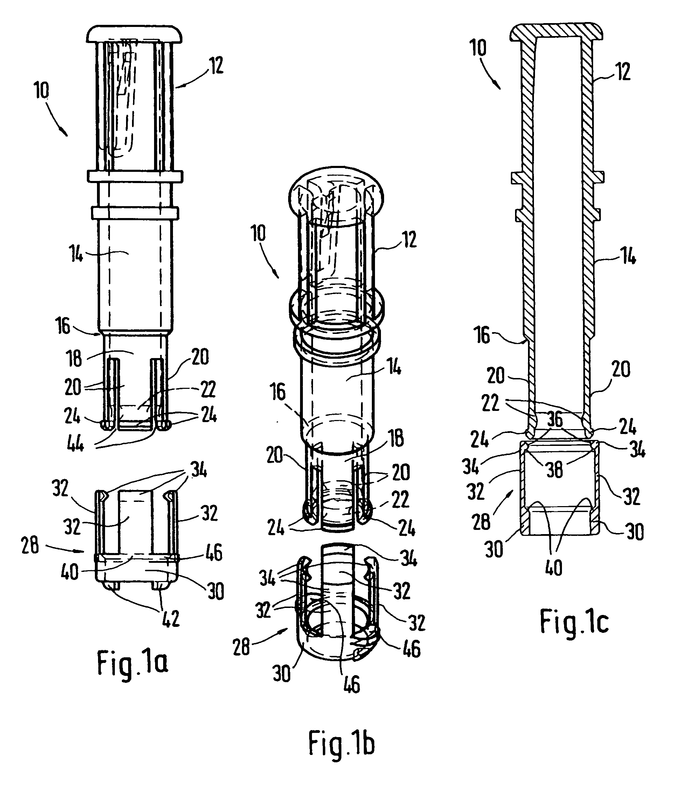

Ein Ausführungsbeispiel der Erfindung ist in der nachfolgenden Beschreibung und Zeichnung näher erläutert. Letztere zeigt in
- Fig. 1a: eine Seitenansicht,
- Fig. 1b: eine perspektivische Ansicht und
- Fig. 1c: einen Längsschnitt durch einen Schaltgriff mit Sicherungshülse,
- Fig. 2a: eine Seitenansicht,
- Fig. 2b: eine perspektivische Ansicht und
- Fig. 2c: einen Längsschnitt durch den Schaltgriff mit Sicherungshülse im vormontierten Zustand,

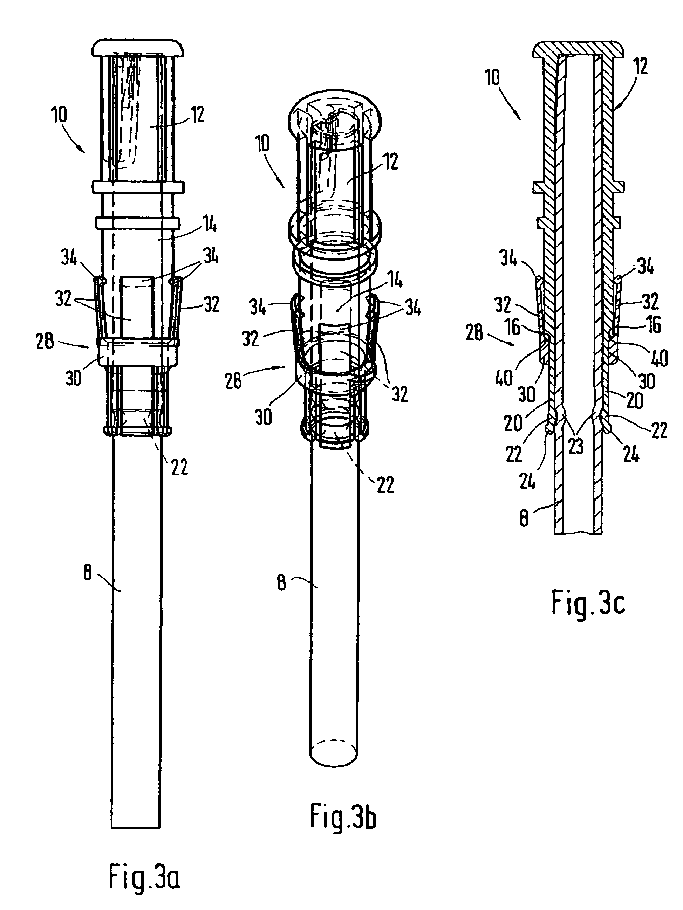

- Fig. 3a: eine Seitenansicht,
- Fig. 3b: eine perspektivische Ansicht und
- Fig. 3c: einen Längsschnitt durch den Schaltgriff mit Sicherungshülse im vormontierten Zustand auf dem Handschalthebel,
- Fig. 4a: eine Seitenansicht,
- Fig. 4b: eine perspektivische Ansicht und
- Fig. 4c: einen Längsschnitt durch den Schaltgriff mit Sicherungshülse auf dem Handschalthebel im montierten Endzustand und
- Fig. 5: eine Darstellung des Schaltgriffs in einer nicht korrekten Montagestellung auf dem Handschalthebel.

### Beschreibung des Ausführungsbeispieles

Der zur Montage auf einem Handschalthebel 8 dargestellte Schaltknauf bzw. Schaltgriff 10 besteht aus einem Kopfteil 12, das später mit einem Kunststoff zur Ausbildung eines Schaltknopfes umschäumt wird. Das sich an das Kopfteil 12 anschließende Kernstück 14 weist an seinem unteren Ende einen mit einer Fase versehene Ringschulter 16 auf. Die Funktion der Ringschulter 16, die im vorliegenden Ausführungsbeispiel mit einer Fase von 45° versehen ist, wird später bei der Montage des Schaltgriffs näher beschrieben. An das Kernstück 14 bzw. an die Ringschulter 16 schließt sich ein im Durchmesser gegenüber dem Kernstück 14 reduzierter Wandungsabschnitt 18 an, der vier über seinen Umfang verteilte Rastelemente 20, im Folgenden als Rastzungen bezeichnet, aufweist. Die radial auslenkbaren Rastzungen 20 weisen an ihrem unteren Ende eine nach innen gerichtete Ringwulst 22 auf, die, wie später näher erläutert, in eine Ringnut 23 des Handschalthebels 8 eingreifen. Am Ende der Rastzungen 20 schließt sich an die Ringwulst 22 ein Anschlag 24 an, der als nach außen gerichtetes mit einer Fase von 90° versehenes Ringelement ausgebildet ist. Die zur Sicherung des Schaltgriffs 10 auf dem Handschalthebel 8 vorgesehene Sicherungshülse 28 besteht aus einem geschlossenen Ringabschnitt 30, der in Umfangsrichtung der Sicherungshülse 28 in vier radial auslenkbare Rastzungen 32 übergeht. Die Rastzungen 32 weisen an ihrem dem Ringabschnitt 30 gegenüberliegenden Ende Rastnasen 34 auf, die mit zwei unter jeweils 45° verlaufenden Flanken 36, 38 versehen sind.

Der geschlossene Ringabschnitt 30 weist eine mit einer Fase von 45° versehene und als Anschlag ausgebildete Innenschulter 40 auf. An der Stirnseite des Ringabschnitts 30 sind Führungsnasen 42 ausgebildet, die als Verdrehsicherung im montierten Zustand in die zwischen den Rastzungen 20 ausgebildeten Lücken 44 eingreifen. Am Außenumfang des Ringabschnittes 30 sind weiterhin zwei Führungsschultern 46 angeflanscht, die der besseren Handhabung bzw. Montage der Sicherungshülse 28 dienen.

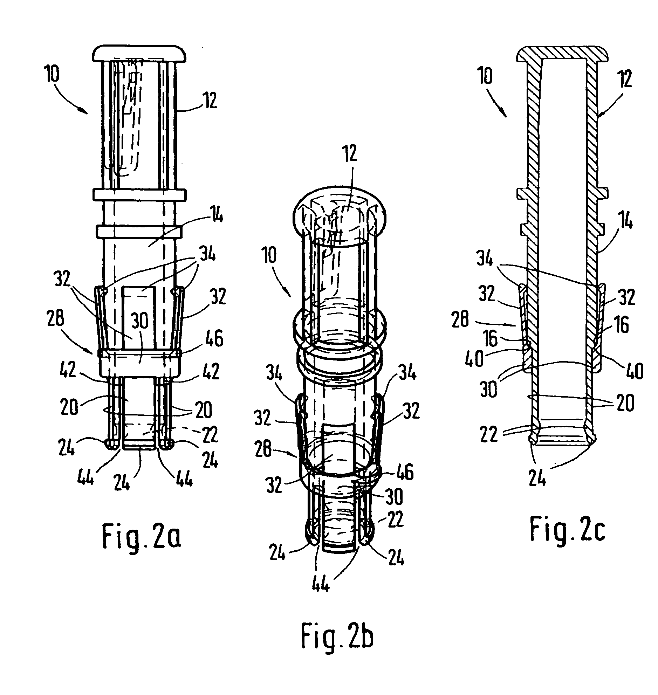

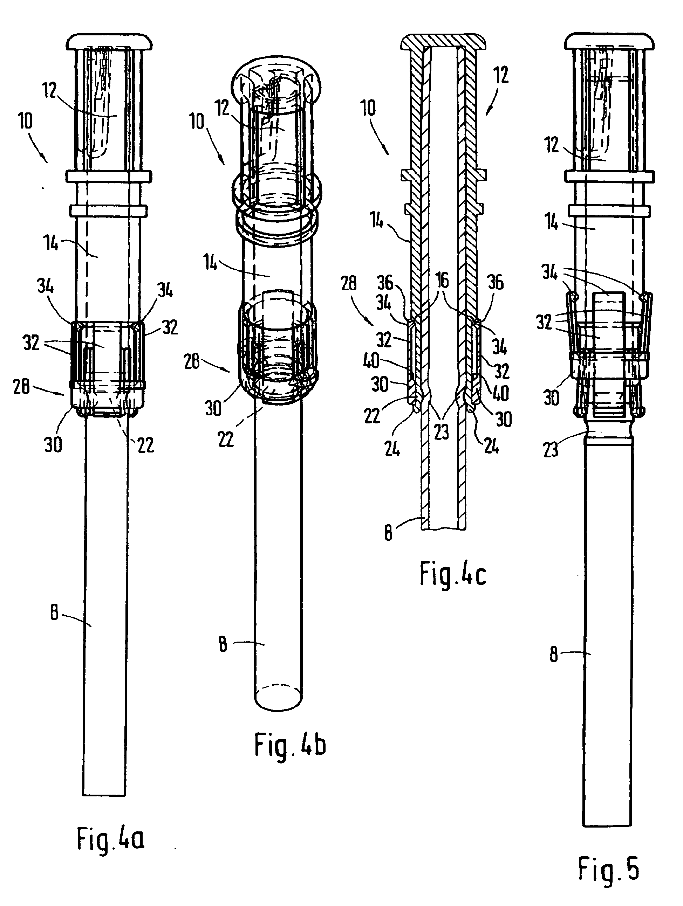

Die Montage des Schaltgriffs 10 auf dem Handschalthebel 8 erfolgt auf folgende Art und Weise: Gemäß Fig. 2 wird als erstes die Sicherungshülse 28 auf dem Schaltgriff 10 vorgesteckt, indem, wie in Fig. 2c dargestellt, die Innenschulter 40 des geschlossenen Ringabschnittes 30 bis an die Ringschulter 16 des Kernstücks 14 geschoben wird. Dadurch, daß die Rastzungen 20 radial auslenkbar sind, kann der Ringabschnitt 30 durch leichtes Verbiegen der Rastzungen 20 nach innen auf diese geschoben werden; durch die ebenfalls radial auslenkbaren Rastzungen 32 ist das Aufschieben der Rastzungen 32 auf das Kernstück 14 möglich. Als zweiter Montageschritt wird die vormontierte Einheit auf den Handschalthebel 8 geschoben, so weit, bis die Ringwülste 22 der Rastzungen 20 in die Ringnut 23 des Handschalthebels 8 eingreifen. Als letzter Montageschritt wird, wie in Fig. 4 dargestellt, die Sicherungshülse 28 mit ihrem geschlossenen Ringabschnitt 30 in Richtung der Rastzungen 20 verschoben, bis die Stirnfläche des geschlossenen Ringabschnittes 30 an dem als Anschlag ausgebildeten Ringelement 24 zum Anliegen kommt. Die Abmessungen des Schaltgriffs 10 und der Sicherungshülse 28 sind so abgestimmt, daß gleichzeitig in dieser Position die obere Flanke 36 der Rastnasen 34 an der Ringschulter 16 zum Anliegen kommt. In diesem Zustand wird die Ringwulst 22 durch den geschlossenen Ringabschnitt 30 der Sicherungshülse 28 in der Ringnut 23 gehalten, so daß der Schaltgriff 10 auf dem Handschalthebel 8 in der vorgesehenen axialen Lage verdrehsicher arretiert ist.

Eine Demontage des Schaltgriffs 10 vom Handschalthebel 8 ist auf einfache Art und Weise dadurch möglich, daß die Sicherungshülse 28 in Richtung des Kopfteils 12 des Schaltgriffs 10 unter Überwindung der an der Ringschulter 16 ausgebildeten Anschlagkraft gezogen wird. Der geschlossene Ringabschnitt 30 gibt die Ringwulst 22 der Rastzungen 20 frei, so daß der Schaltgriff 10 vom Handschalthebel 8 abgezogen werden kann.

In Fig. 5 ist eine nicht korrekte Motageposition des Schaltgriffs auf dem Handschalthebel dargestellt, bei der die Rastzungen 20 des Schaltgriffs 10 nicht in der Ringnut 23 aufgenommen sind. Die weitere Montage, d.h. das Verschieben der Sicherungshülse 28 in ihre Endposition ist nicht möglich. Hier bekommt der Monteur die Rückmeldung, daß der Schaltgriff 10 noch nicht korrekt auf dem Handschalthebel 8 sitzt

## Patentansprüche

1. Handschaltung für ein Kraftfahrzeug, mit einem Handschalthebel(8), der an seinem einen Ende ein Schaltgriff (10) aufweist, und an seinem anderen Ende mit funktionell nachgeordneten Schaltelementen verbunden ist, wobei der Schaltgriff (10) im Montagezustand gegenüber dem Handschalthebel (8) axial unverschiebbar festgelegt ist, indem radial auslenkbare Rastelemente (20) des Schaltgriffs (10) in eine Ringnut (23) des Handschalthebels (8) eingreifen und im Montagezustand in der Ringnut (23) durch ein die Rastelemente umgreifendes Sicherungselement gehalten sind,
**dadurch gekennzeichnet, dass**
das Sicherungelement als eine Sicherungshülse (28) ausgebildet ist, die radial auslenkbare Rastzungen (32) und einen Ringabschnitt (30) aufweist und auf dem Schaltgriff (10) vormontierbar ist, und daß der Ringabschnitt (30) im montierten Zustand des Schaltgriffs (10) die Rastelemente (20) des Schaltgriffs (10) umgreift, während die Rastzungen (32) der Sicherungshülse (28) an einem Wandungsabschnitt (18) des Schaltgriffs (10) abgestützt sind.

2. Handschaltung nach Anspruch 1, **dadurch gekennzeichnet, dass**
für die Vormontage der Sicherungshülse (28) auf dem Schaltgriff (10) der Ringabschnitt (30) der Sicherungshülse (28) innen einen Gegenanschlag (40), insbesondere in Form einer Innenschulter, aufweist, wobei bei einem ersten Montageschritt die Sicherungshülse an einem am Schaltgriff (10) ausgebildeten Anschlag (16) anliegt.

3. Handschaltung nach Anspruch 1 oder 2, **dadurch gekennzeichnet, dass**
die Rastelemente (20) des Schaltgriffs (10) einen Außenanschlag (24) aufweisen, an dem im montierten Zustand des Schaltgriffs (10) der Ringabschnitt (30) der Sicherungshülse (28) anliegt.

4. Handschaltung nach Anspruch 2, **dadurch gekennzeichnet, dass**
der Anschlag (16) als Ringschulter mit einer Fase von 45° bis 60° ausgebildet ist.

5. Handschaltung nach einem der vorhergehenden Ansprüche, **dadurch gekennzeichnet, dass**
als Verdrehsicherung am Ringabschnitt (30) der Sicherungshülse (28) Führungsnasen (42) ausgebildet sind, die im montierten Zustand in zwischen den Rastelementen (20) des Schaltgriffs (10) ausgebildete Lücken (44) eingreifen.

6. Handschaltung nach einem der vorhergehenden Ansprüche, **dadurch**
**gekennzeichnet, dass**
zur Montage der Sicherungshülse (28) am Außenumfang des Ringabschnittes (30) Führungsschultern (46) vorgesehen sind.

## Claims

1. A manual gearshift mechanism for a motor vehicle, with a manual gearshift lever (8) which at its one end has a gearshift grip (10) and at its other end is connected to gearshift members which functionally are arranged downstream, wherein, in the mounted state, the gearshift grip (10) is axially non-displaceably fixed in relation to the manual gearshift lever (8) by means of radially deflectable locking members (20) of the gearshift grip (10), which locking members (20) engage in an annular groove (23) in the manual gearshift lever (8) and, in the mounted state, are held in the annular groove (23) by a securing member engaging round the locking members, **characterised in that** the securing member is formed as a securing sleeve (28) which has radially deflectable locking tongues (32) and an annular portion (30) and is premountable on the gearshift grip (10), and **in that**, in the mounted state of the gearshift grip (10), the annular portion (30) engages round the locking members (20) of the gearshift grip (10), while the locking tongues (32) of the securing sleeve (28) are supported against a wall portion (18) of the gearshift grip (10).

2. A manual gearshift mechanism according to claim 1, **characterised in that** the annular portion (30) of the securing sleeve (28) has a counterstop (40) on its inside, especially in the form of an inner shoulder, for premounting the securing sleeve (28) on the gearshift grip (10), wherein, in a first mounting step, the securing sleeve rests against a stop (16) formed on the gearshift grip (10).

3. A manual gearshift mechanism according to claim 1 or 2, **characterised in that** the locking members (20) of the gearshift grip (10) have an outer stop (24), against which the annular portion (30) of the securing sleeve (28) rests in the mounted state of the gearshift grip (10).

4. A manual gearshift mechanism according to claim 2, **characterised in that** the stop (16) is formed as an annular shoulder with a chamfer of 45° to 60°.

5. A manual gearshift mechanism according to any one of the preceding claims, **characterised in that** guide projections (42) acting as anti-rotation means are formed on the annular portion (30) of the securing sleeve (28) and, in the mounted state, engage in gaps (44) formed between the locking members (20) of the gearshift grip (10) .

6. A manual gearshift mechanism according to any one of the preceding claims, **characterised in that**, for mounting the securing sleeve (28), guide shoulders (46) are provided on the outer circumference of the annular portion (30).

## Revendications

1. Levier de changement de vitesse manuel pour un véhicule automobile, comportant un levier de changement de vitesse (8), qui comporte sur l'une de ses extrémités une poignée de commande (10) et qui est relié par son autre extrémité à des éléments de passage de vitesse, montés fonctionnellement en aval, la poignée de commande (10) étant fixée dans la position de montage de manière immobile dans le sens axial par rapport au levier de changement de vitesse (8), du fait que des éléments d'accrochage (20) de la poignée de commande (10), pouvant être déviés dans le sens radial, s'engagent dans une rainure annulaire (23) du levier de changement de vitesse (8) et, dans la position de montage, sont maintenus dans la rainure annulaire (23) par un élément de retenue entourant les éléments d'accrochage, **caractérisé en ce que** l'élément de retenue est réalisé sous la forme d'une douille de retenue (28), qui comporte des languettes d'accrochage (32), pouvant être déviées dans le sens radial, et une partie annulaire (30) et qui peut être pré-assemblée à la poignée de commande (10), et **en ce que** la partie annulaire (30) dans la position montée de la poignée de commande (10) entoure les éléments d'accrochage (20) de la poignée de commande (10), tandis que les languettes d'accrochage (32) de la douille de retenue (28) sont en appui sur une partie de paroi (18) de la poignée de commande (10).

2. Levier de changement de vitesse manuel selon la revendication 1, **caractérisé en ce que** pour le pré-assemblage de la douille de retenue (28) sur la poignée de commande (10), la partie annulaire (30) de la douille de retenue (28) comporte à l'intérieur une contre-butée (40), en particulier sous la forme d'un épaulement intérieur, sachant que dans une première étape de montage, la douille de retenue est en appui contre une butée (16) réalisée sur la poignée de commande (10).

3. Levier de changement de vitesse manuel selon la revendication 1 ou 2, **caractérisé en ce que** les éléments d'accrochage (20) de la poignée de commande (10) comportent une butée extérieure (24), sur laquelle prend appui la partie annulaire (30) de la douille de retenue (28) lorsque la poignée de commande (10) est dans la position montée.

4. Levier de changement de vitesse manuel selon la revendication 2, **caractérisé en ce que** la butée (16) est réalisée sous forme d'épaulement annulaire avec un chanfrein de 45° à 60°.

5. Levier de changement de vitesse manuel selon l'une quelconque des revendications précédentes, **caractérisé en ce que**, pour former un système anti-rotation, des becs de guidage (42) sont réalisés sur la partie annulaire (30) de la douille de retenue (28), lesquels, dans la position montée, s'engagent dans des interstices (44) formés entre les éléments d'accrochage (20) de la poignée de commande (10).

6. Levier de changement de vitesse manuel selon l'une quelconque des revendications précédentes, **caractérisé en ce que**, pour le montage de la douille de retenue (28), il est prévu des épaulements de guidage (46) sur le pourtour extérieur de la partie annulaire (30).
